Europäisches Patentamt

European Patent Office

Office européen des brevets

(19)

(11) Publication number: **0 176 705**
**B1**

## EUROPEAN PATENT SPECIFICATION

(12)

(45) Date of publication of patent specification: **11.01.89**

(21) Application number: **85109916.8**

(22) Date of filing: **07.08.85**

(51) Int. Cl.⁴: **G 21 C 15/24, H 02 K 44/00, G 21 C 1/02**

(54) Fast breeder reactor.

(30) Priority: **27.08.84 JP 176630/84**

(43) Date of publication of application:
**09.04.86 Bulletin 86/15**

(45) Publication of the grant of the patent:
**11.01.89 Bulletin 89/02**

(84) Designated Contracting States:
**DE FR GB**

(56) References cited:
EP-A-0 061 120
GB-A-2 033 644

LIQUID METAL ENGINEERING AND TECHNOLOGY, PROCEEDINGS OF THE THIRD INTERNATIONAL CONFERENCE, Oxford, 9th-13th April 1984, vol. 3, pages 245-253, The British Nuclear Energy Society, London, GB; C. DEVERGE et al.: "The use of electromagnetic pumps in large LMFBR plants"

NUCLEAR ENERGY, vol. 20, no. 1, February 1981, pages 79-90, London, GB; D.F. DAVIDSON et al.: "Sodium electrotechnology at the Risley Nuclear Power Development Laboratories"

(73) Proprietor: **HITACHI, LTD.**
6, Kanda Surugadai 4-chome Chiyoda-ku
Tokyo (JP)

(72) Inventor: **Gotoh, Tadashi**
1-17-24, Ishinazaka-cho
Hitachi-shi Ibaraki-ken (JP)
Inventor: **Yamamoto, Hisashi**
2920-127, Mawatari
Katsuta-shi Ibaraki-ken (JP)
Inventor: **Yamakawa, Masanori**
5-15-10, Kanesawa-cho
Hitachi-shi Ibaraki-ken (JP)
Inventor: **Shibata, Yoji**
894-16, Takeda
Katsuta-shi Ibaraki-ken (JP)

(74) Representative: **Patentanwälte Beetz sen. - Beetz jun. Timpe - Siegfried - Schmitt-Fumian**
Steinsdorfstrasse 10
D-8000 München 22 (DE)

# Description

This invention relates to a fast breeder reactor of the kind referred to in the pre-characterizing portion of patent claim 1. Such a fast breeder reactor is known from GB—A—2 033 644.

Fast breeder reactors (hereinbelow, simply termed "FBRs") which employ liquid metal, especially sodium, as a coolant include the loop type and the tank type. Each of the types is constructed of a primary cooling system which directly cools the heat of a reactor core generated by nuclear fission, a secondary cooling system which transports heat out of the reactor through an intermediate heat exchanger, a steam generator which produces superheated vapor for driving a turbine generator, and a cooling system such as a water/steam system.

The loop type builds a system by connecting the cooling systems and the components by means of pipes. In contrast, the tank type is a system wherein primary cooling system equipments such as the reactor core, primary system pumps and intermediate heat exchangers are contained within a main vessel in the shape of a large tank and wherein the coolant of the primary system for directly cooling the reactor core circulates within the tank and transmits the heat outside the reactor from the secondary sides of the intermediate heat exchangers. Since the present invention is more effective when applied to the tank type of the latter, the FBR of the tank type will be principally described by way of example.

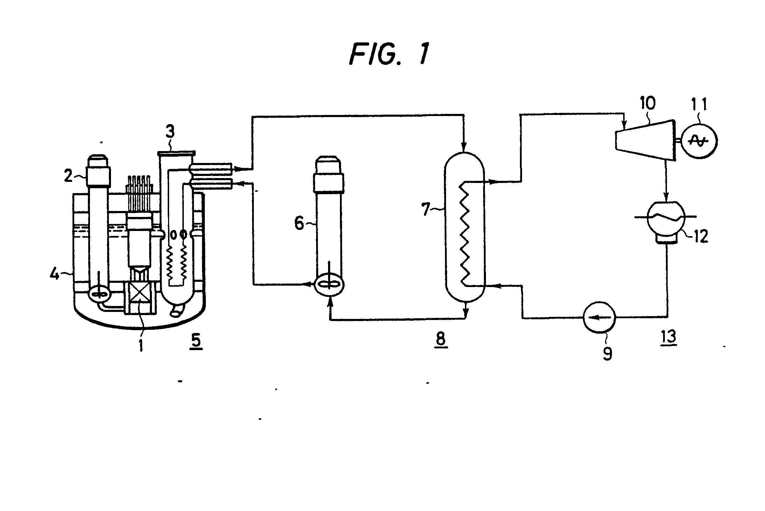

Fig. 1 is a diagram showing the whole system of a tank type FBR.

The system of the tank type FBR comprises in combination a primary cooling system 5, a secondary cooling system 8 and a steam system 13.

Most of the primary cooling system 5 is contained within the tank-shaped main vessel 4 of the FBR.

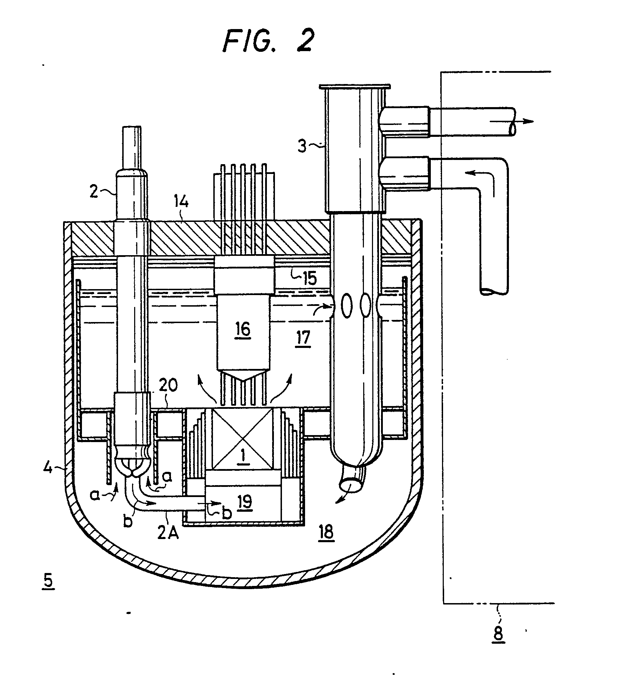

Fig. 2 is a structural diagram of the primary cooling system 5 mentioned above. The primary cooling system 5 is generally received in the tank-reactor main vessel 4. Located substantially centrally is a reactor core 1 under which a high-pressure plenum chamber 19 exists, and the outlet pipe 2A of each primary system pump 2 is connected to this high-pressure plenum chamber 19. The tank-reactor main vessel 4 is divided into an upper plenum portion 17 and a lower plenum portion 18 by a partition wall structure 20, and each intermediate heat exchanger 3 is arranged penetrating the partition wall structure 20. Located directly above the reactor core 1 is a reactor upper-portion mechanism 16 which has a drive mechanism for fuel replacement, control rods, etc. The top of the tank-reactor main vessel 4 is provided with a lid which is called a roof slab 14, and which supports the aforementioned components such as the intermediate heat exchangers 3, reactor upper-portion mechanism 16 and primary system pumps 2 in suspending fashion.

The lower surface of the roof slab 14 is provided with thermal shield plates 15 in order to prevent radiant heat from high-temperature sodium. A construction similar to that explained above is described in Japanese Patent Application Laying-open No. 49—125797. For example, in case of "Super Phenix" of 1200 MWe class, the diameter of a tank reactor is about 21 m., and the intermediate heat exchangers 3 numbering eight and the primary system pumps 2 of the mechanical type numbering four are arranged around the core of the reactor. In the nuclear reactor structure thus constructed, sodium in the primary cooling system 5 is heated by the reactor core 1, enters each intermediate heat exchanger 3 at the upper plenum 17, delivers heat to sodium in the secondary cooling system 8 and is thereafter released to the lower plenum 18. The suction portion of each primary system pump 2 is open into the lower plenum 18, so that the sodium having become a lower temperature in consequence of the delivery of the heat as stated above is introduced as indicated by arrows $a$ and is forcibly fed into the high-pressure plenum chamber 19 again as indicated by arrows $b$. Accordingly, the primary system sodium is circulated in this manner while repeating the heating and cooling of the interior of the tank-reactor main vessel 4.

As shown in Fig. 1, the secondary cooling system 8 operates so that sodium liquid discharged from a steam generator 7 may be brought into the intermediate heat exchanger 3 by a secondary system pump 6 and that sodium liquid which has become a higher temperature upon receiving the heat of the primary cooling system via the intermediate heat exchanger 3 and which is discharged from the intermediate heat exchanger 3 may be brought back into the steam generator 7.

The steam system 13 feeds the steam generator 7 with water in a steam condenser 12 by means of a feed water pump 9 and applies the heat of the sodium liquid of the secondary cooling system 8 so as to turn the water into steam, and it sends the steam from the steam generator 7 to a turbine 10 so as to rotate the turbine 10 and then rotate an electric generator 11 interlocking with this turbine 10, thereby to produce electric power, whereupon the steam having passed through the turbine 10 is turned by the condenser 12 into water which is circulated through the steam system again.

In this manner, the cooling systems of the whole FBR is constructed. Usually, each of the cooling systems from the secondary system to the turbine is divided into a plurality of loops from the viewpoints of a heat exchange efficiency, a plant controllability, etc. In the case of the Super Phenix, each of the secondary system 8 and the water/steam system 13 is constructed in four loops for the eight intermediate heat exchangers 3.

The most important reason why the secondary cooling system 8 is interposed between the primary cooling system 5 and the water/steam system 13, is the consideration of safety according to which to the end of preventing the exposure of the exterior to sodium that has been activated by absorbing fast neutrons in the reactor core 1, heat is once transferred to the non-radioactive sodium within the secondary cooling system 8 through so ium wi i the intermediate heat exchanger 3 and is thereafter transported to the side of the steam generator 7, whereby the activated sodium within the primary cooling system 5 is prevented from coming out of the main vessel 4.

The sodium liquid circulating within the primary cooling system 5 is activated during the circulation and accumulates therein $^{22}$Na of long half life, so that repair and inspection become difficult. Accordingly, a high reliability is required of the equipments in the primary cooling system of the FBR. Nevertheless, the mechanical pump is a rotary machine, which is an equipment being least immune to thermal deformation, vibrations, etc. and having the highest potential of trouble. A concrete study on introducing an electromagnetic pump instead of the mechanical pump has recently been made in France. In case of assembling the electromagnetic pump into the primary cooling system 5, the mechanical fault rate of the pump lowers. Since, however, the environment of use of the electromagnetic pump is the depths of the liquid of high-temperature sodium, the electrical durabilities of an exciting coil, feeding electric wires, etc., the sodium proof of an insulator, and so forth arise as new problems. Furthermore, according to the contents of the concrete study mentioned above, merely the intermediate heat exchanger and the electromagnetic pump are coupled in series. Therefore, the space factor of the components in the series direction is inferior, and the length in the series direction becomes too great, so that the main vessel of the FBR tends to become large in size.

From GB—A—2 033 644 a fast breeder reactor is known comprising: a two-system flow path consisting of a primary cooling system of the fast breeder reactor and a secondary cooling system to introduce liquid metals, and a magnetic field generating means, wherein said primary and secondary cooling systems are oriented in a direction to intersect the magnetic flux generated by said magnetic field generating means, and the flow of fluid in the primary system is induced by the forced flow of fluid in the secondary system.

According to the electromagnetic flow coupler taught in GB—A—2 033 644, a tube in which primary sodium flows is installed inside a duct in which secondary sodium flows, said duct and a magnet being alternatingly arranged in an annular direction. Plural tubes are arranged in the radial direction causing the electromagnetic flow coupler to become bulky.

In the electromagnetic flow coupler an electric current C is generated in the duct as the magnetic field is generated among the magnets in annular direction. The electric current C in said duct flows in radial direction, makes a U-turn on a copper member in said duct and flows through the tube, causing primary sodium in the tube 25 to flow.

An object of this invention is to provide an FBR cooling system of superior space factor.

This object is accomplished according to the present invention with a fast breeder reactor comprising an intermediate heat exchanger as claimed.

Dependent claims are directed on features of preferred embodiments of the fast breeder reactor according to the present invention.

Preferred embodiments of the present invention are described in the following with reference to the drawings, in which:

Fig. 1 shows a prior-art example and is a schematic flow diagram of the cooling systems of a tank type fast breeder reactor.

Fig. 2 shows a prior-art example and is an enlarged view of the primary cooling system shown in Fig. 1.

Fig. 3 shows a first embodiment of the present invention and is a flow diagram of the cooling systems of a tank type fast breeder reactor.

Fig. 4 is a sectional view taken and seen along arrows I — I in Fig. 3 and illustrates only a half because the corresponding section is horizontally symmetric.

Fig. 5 is a vector diagram for explaining the fundamental principle of the present invention.

Fig. 6 is an explanatory diagram showing the vectorial relations of Fig. 5 in conformity with the structure of Fig. 3.

Fig. 7 shows a second embodiment of the present invention and is a sectional view illustrative of the construction of the primary cooling system of a tank type fast breeder reactor.

Fig. 8 is a vertical sectional view of an intermediate heat exchanger shown in Fig. 7.

Fig. 9 is a sectional view taken and seen along arrows II — II in Fig. 8.

Fig. 10 is a schematic perspective view showing a section of an intermediate heat exchanger in Fig. 3.

Fig. 11 is a sectional view taken along III — III in Fig. 8.

Fig. 12 is a sectional view taken along IV — IV in Fig. 8.

Fig. 13 is a sectional view taken along V — V in Fig. 8.

Fig. 14 is a sectional view taken along VI — VI in Fig. 8.

Preferred Embodiments of the Invention

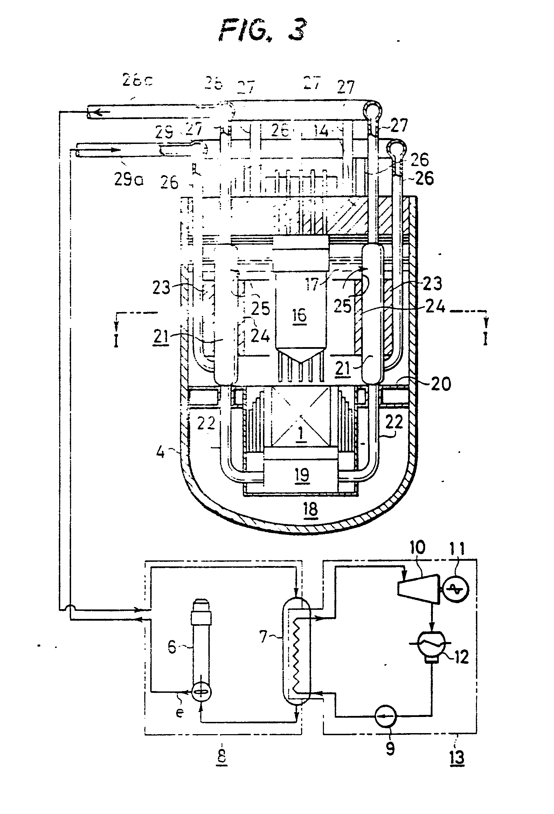

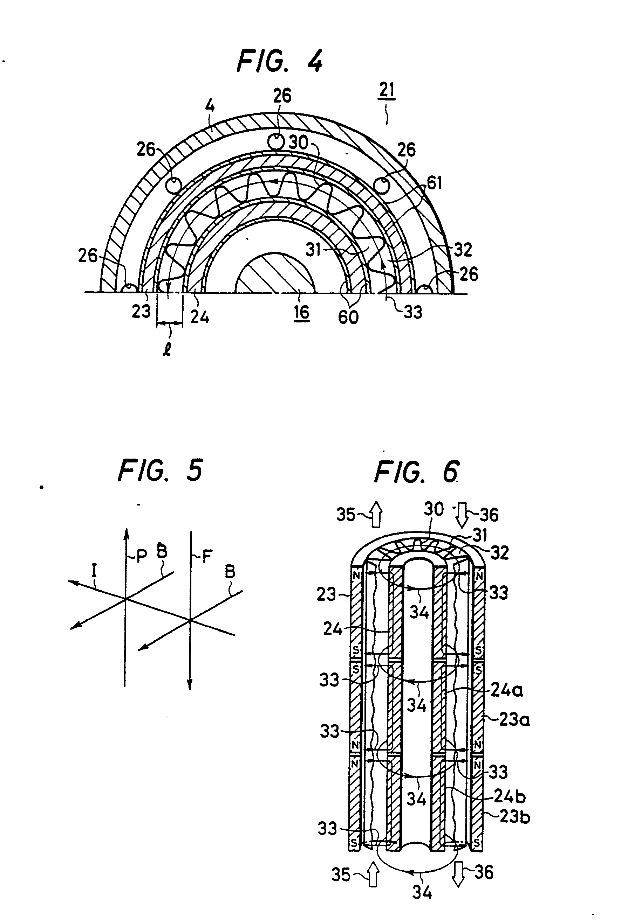

The nuclear reactor structure of an FBR according to a first embodiment of the present invention shown in Figs. 3 and 4 is as stated below.

A tank-shaped main vessel 4 is covered with a roof slab 14. A reactor core 1 is arranged under a reactor upper-portion mechanism 16 which is supported by the roof slab 14. This reactor core 1 is supported by a partition wall 20 which is fitted in the main vessel 4. The partition wall 20 divides the interior of the main vessel 4 into an upper plenum 17 and a lower plenum 18. Inside the lower plenum 18, a high-pressure plenum chamber 19 is formed which communicates with the reactor core 1 fluid-wise.

Inside the upper plenum 17, an electromagnetic flow coupler type intermediate heat exchanger 21 which is annular is formed in a manner to surround the reactor upper-portion mechanism 16.

The structure of the electromagnetic flow coupler type intermediate heat exchanger 21 is as follows. It has a cylindrical inner magnetic material 24 whose surfaces are clad with stainless steel plates 60 durable against sodium, and a cylindrical outer magnet 23 which is clad with stainless steel plates 61 and which is arranged so as to surround the outer side of the inner magnetic material 24. In arranging the magnet 23 and the magnetic material 24, their polarities are conformed so that a magnetic flux may have a direction traversing an annular space I developing between the magnet 23 and the magnetic material 24. Since both the magnet 23 and the magnetic material 24 are used in a high-temperature sodium liquid, they are made of a substance which has good high-temperature magnetic characteristics, for example, a magnetic substance whose Curie point is high. In addition, both the magnet 23 and the magnetic material 24 are of a material such as alnico V, and the magnet 23 is a permanent magnet. As the magnetic substance of this magnet, one of the best possible high-temperature characteristics is selected as stated before. The magnet 23 and the magnetic material 24 constitute a magnetic field generator. Inside the annular space I appearing between the magnet 23 and the magnetic material 24, a stainless steel plate which is electrically conductive and which is durable against sodium is arranged as a heat transfer plate 30 in a corrugated state as shown in Fig. 4. Both the ends of the heat transfer plate 30 are welded to each other. This heat transfer plate 30 is partly welded to the stainless steel plates which clothe the magnet 23 and the magnetic material 24. Owing to the provision of the heat transfer plate 30, the annular space I formed between the magnet 23 and the magnetic material 24 is divided into a primary cooling system channel 31 which faces the inner magnet 24 and a secondary cooling system channel 32 which faces the outer magnet 23. Inlet pipes 26, which are disposed in a manner to communicate with the secondary cooling system channel 32 fluid-wise and to be shut off from the primary cooling system channel 31, penetrate the roof slab 14 and are communicatingly connected to an inlet header tube 29 which is a ring-shaped bent tube. Outlet pipes 27, which are disposed in a manner to communicate with the secondary cooling system channel 32 fluid-wise and to be shut off from the primary cooling system channel 31, penetrate the roof slab 14 and are communicatingly connected to an outlet header tube 28 which is a ring-shaped bent tube. Entrances 25, which are open to the upper plenum 17, communicate with only the primary one 31 of the primary and secondary cooling system channels 31 and 32 fluid-wise. The upper parts of primary fluid exit pipes 22 communicate with only the primary one 31 of the primary and secondary cooling system channels 31 and 32 fluid-wise, while the lower parts thereof are communicatingly connected to the interior of the high-pressure plenum chamber 19. The above is the structure of the electromagnetic flow coupler type intermediate heat exchanger 21.

One end of a secondary cooling system pipe 29a is connected to the inlet header tube 29, while one end of a secondary cooling system pipe 28a is similarly connected to the outlet header tube 28. The other end of the pipe 29a is connected to the discharge port side of a pump 6 in a secondary cooling system 8, and the other end of the pipe 28a to a steam generator 7. The secondary cooling system 8 and a water/steam system 13 are identical in construction to those of the prior-art example, and in Fig. 3, the same components as in the prior-art example are assigned the same symbols.

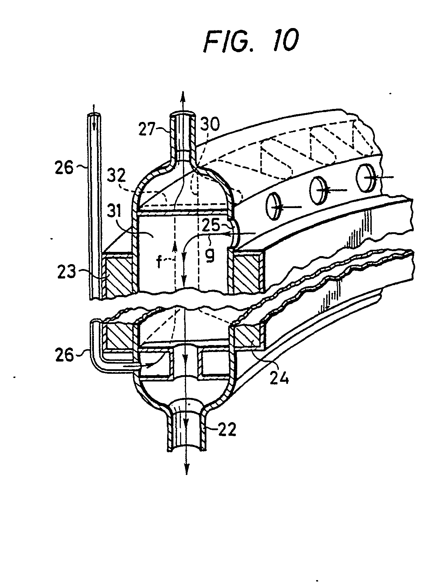

In the FBR of the above structure, when sodium liquid in the secondary cooling system 8 is circulated in the direction of an arrow e by a pumping force based on the pump 6, it enters the inlet header tube 29 from the pipe 29a and flows into the respective inlet pipes 26 in branched fashion. The branch streams rise within the secondary cooling system channel 32 along the heat transfer plate 30 as indicated by an arrow f in Fig. 10, flow out to the respective outlet pipes 27 and join within the outlet header tube 28. The resulting stream is sent into the steam generator 7 through the tube 28, and it is drawn by suction and then circulated by means of the pump 6 again. Upon the occurrence of the circulation of the sodium liquid in the secondary cooling system 8, when this sodium liquid rises in the secondary cooling system channel 32, it induces the action of giving a downward flowing force to sodium liquid in the primary cooling system channel 31. This action will be described in detail later. For that reason, sodium liquid in the upper plenum 17 inside the main vessel 4 flows downwards within the primary cooling system channel 31 from the entrances 25 as indicated by an arrow g in Fig. 10 and passes through the interiors of the primary fluid exit pipes 22 until it is discharged into the high-pressure plenum chamber 19. It passes through the reactor core 1 and is heated, whereupon it is returned into the upper plenum 17. While the sodium liquid in the main vessel 4 and the sodium liquid in the secondary cooling system 8 are flowing in the upward and downward directions opposite to each other in contact with the heat transfer plate 30, the latter receives heat from the former through the heat transfer plate 30 and transports the heat to the steam generator 7. The heat transported to the steam generator 7 is consumed by the water/steam system 13 in order to produce high-pressure steam, which is used as energy for rotating the -turbine 10 of an electric generator 11.

Next, the action of affording the flowing force to the sodium liquid in the primary cooling system channel 31 will be explained.

Fig. 5 illustrates the operating principle of an electromagnetic flow coupler. The sodium liquids of the primary cooling system and the secondary cooling system exist as electric conductors within the magnetic flux B generated by the magnet 23 and the magnetic material 24. When the force F of the pump 6, for example, is applied to one conductor (the sodium liquid of the secondary cooling system), a current I is generated in the conductor (the sodium liquid of the secondary cooling system) in a direction which is orthogonal to both the magnetic flux B and the force F. This phenomenon corresponds to a power generation portion based on the right-hand rule. Meanwhile, when the other conductor (the sodium liquid in the primary cooling system channel 31) having received the current I is subjected to the same magnetic flux B, an electromotive action conforming to the left-hand rule develops this time, and the other conductor receives a force P in a direction which is orthogonal to both the magnetic flux B and the current I. In consequence, the other of the respective conductors in the two channels existing within the identical magnetic flux B undergoes the flowing force being the force P in the direction opposite to that of the driving force owing to the pump.

It is Fig. 6 that elucidates the operation of the electromagnetic flow coupler type intermediate heat exchanger 21 based on this principle.

Referring to Fig. 6, a magnetic flux 33 corresponding to the magnetic flux B in Fig. 5 is generated by the outer magnet 23 and the inner magnetic material 24. Thus, the magnet 23 and the magnetic material 24 are utilized as the magnetic field generator for producing the magnetic flux 33. The magnetic flux 33 has parts extending in a direction in which the annular space I defined between the magnet 23 and the magnetic material 24 is traversed radially and horizontally. When the sodium liquid 35 of the secondary cooling system is caused to flow through the secondary cooling system channel 32 by the pump 6 in a direction orthogonal to the traversing direction of the magnetic flux 33, namely, in a vertical (thrust) direction from the lower part to the upper part of the channel 32, an annular current 34 is generated in the annular space I. This annular current 34 corresponds to the current I in Fig. 5. The sodium liquid 36 of the primary cooling system, which has been introduced into the primary cooling system channel 31 from the entrances 25 upon undergoing the current 34 and the magnetic flux 33, flows as a stream in a downward vertical (thrust) direction. The force of the flow corresponds to the force P in Fig. 5. Both the sodium liquids 35 and 36 can be caused to flow by only one pump 6 while exchanging heat through the heat transfer plate 30. In this way, the generated current I becomes the annular current 34 efficiently passing through the respective channels 31 and 32, so that efficient flowing states of the sodium liquids are attained.

In order to bestow a satisfactory heat exchange performance on the heat exchanger of such operations, a large heat transmission area needs to be secured. While the heat transfer plate 30 offers a large heat exchange plane because of its corrugations, it is rendered long in the vertical direction to the end of ensuring a more sufficient heat transmission plane. Consequently, outer magnets 23a and 23b are comprised besides the outer magnet 23, and the whole outer magnet assembly is constructed as a three-stage arrangement in which the respective magnets 23, 23a and 23b are arrayed in series. The same applies to the magnetic material members 24, 24a and 24b of the inner side. The magnetic poles of the respective stages of the magnets are arrayed in the order of N — S, S — N and N — S, whereby no magnetism is cancelled. Accordingly, the greatest plus and minus magnitudes of the magnetic flux 33 appear at the joint parts of the adjacent stages.

In the structure of Fig. 6, the sodium liquid 35 of the secondary cooling system of the FBR as driven by the pump 6 is injected into the secondary cooling system channel 32 from below and is put into an ascending stream, whereby the annular current 34 is generated in the portion defined between the magnet 23 and the magnetic material 24. As regards the magnitudes and directions of the annular current 34, the directions become opposite to each other and the greatest current values arise at the joint parts of the respectively adjacent magnet stages. Subject to this annular current 34 and the magnetic flux 33, the sodium liquid 36 in the primary cooling system channel 31 adjoining the aforementioned sodium liquid 35 with the corrugated heat transfer plate 30 interposed therebetween has the force in the descending stream direction induced therein. The flux components and current components in the mutually opposite directions at the joint parts of the adjacent magnet stages act to give the sodium liquid 36 forces in the same directions relative to each other, and this action takes place in the heat transmission surface of the whole length and the whole radius, with the result that all the forces are combined to produce a great force of lowering the sodium liquid 36.

In this manner, according to the first embodiment of the present invention, the static structure which does not require any mechanical or electrical movable component or any component to be fed with electric power is used for obtaining the driving force of the sodium liquid of the primary cooling system of the FBR, so that the reliability of the FBR plant is remarkably enhanced.

Moreover, since any pump need not be installed in the main vessel 4, this main vessel 4 becomes small in size. Furthermore, since the heat exchange action region is annular, the size becomes still smaller. These are effective especially for reducing the diameter of the main vessel 4. Such facts are effective to curtail the construction cost of the FBR plant as a whole.

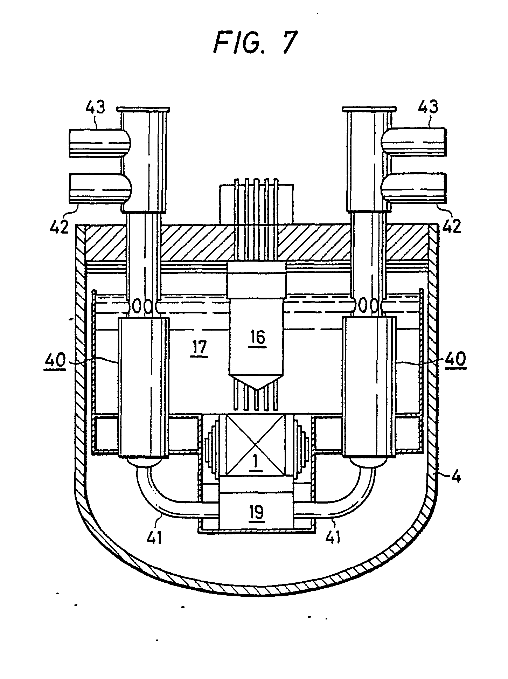

The embodiment in Figs. 3 and 4 has illustrated the structure wherein the single intermediate heat exchanger of the electromagnetic flow coupler type extending along the whole circumference of the inner wall of the tank-reactor main vessel is disposed in the main vessel 4. As a modification, as in a second embodiment of the present invention shown in Fig. 7, several small-sized intermediate heat exchangers 40 of the electromagnetic flow coupler type are arranged around the reactor core 1, and the primary side exit pipes 41 of the respective intermediate heat exchangers 40 of the electromagnetic flow coupler type are connected to the high-pressure plenum chamber 19.

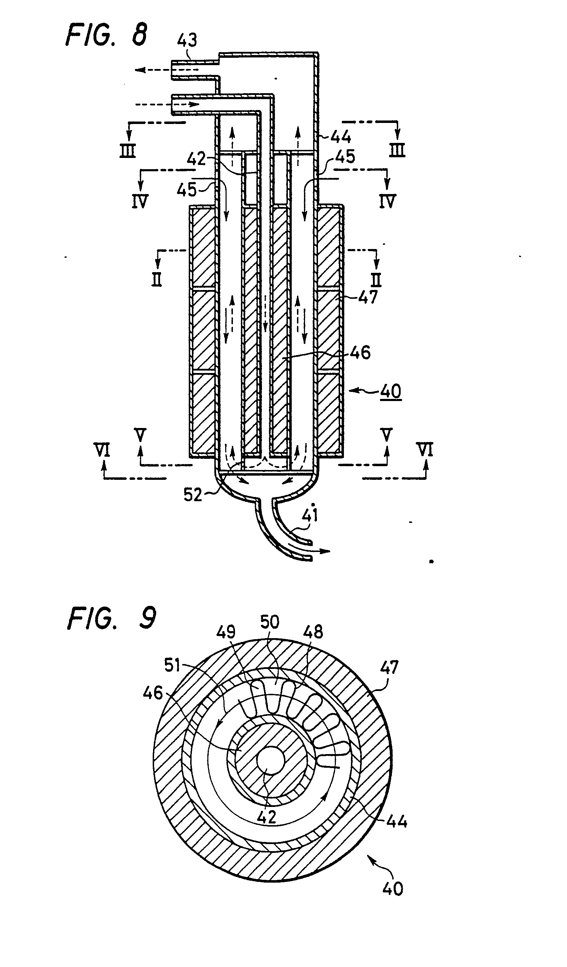

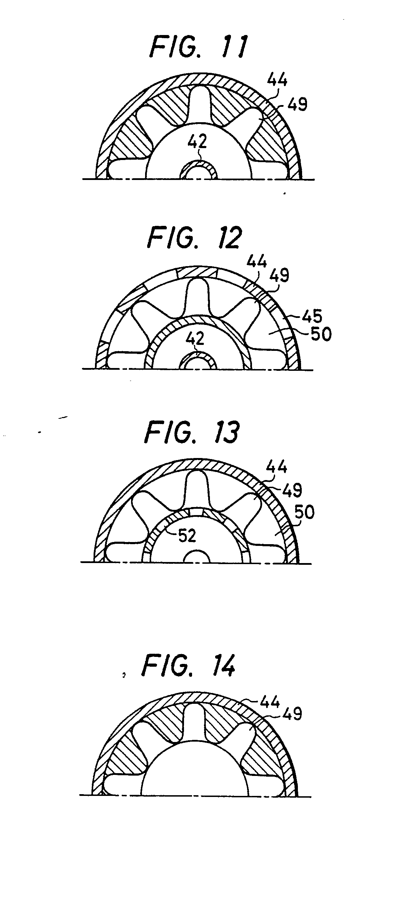

Fig. 8 shows the vertical sectional structure of the electromagnetic flow coupler type intermediate heat exchanger 40 depicted in Fig. 7. Fig. 9 shows the II — II sectional structure thereof. The respective sectional structures III — III to VI — VI thereof are as shown in Figs. 11 to 14.

According to this construction, a secondary cooling system inlet pipe 42 is centrally provided, the sodium liquid of the secondary cooling system having passed therethrough turns up and becomes an ascending stream at the lower part thereof by passing a passage port 52 as indicated by arrows of dotted lines in Fig. 8, and the stream flows out from a secondary cooling system outlet pipe 43 to the secondary cooling system 8. The sodium liquid of the primary cooling system in the upper plenum 17 flows in from entrances 45 for the sodium liquid of the primary cooling system, which are openings provided in the upper part of a barrel 44, and it flows out from the primary cooling system exit pipe 41 at the lower part as indicated by arrows of solid lines. As permanent magnets, outer magnets 47 are disposed on the outer periphery of the barrel as an arrangement of several vertical stages in a manner to surround an inner magnetic material member 46, thereby to construct a magnetic field generator. An annular space enclosed with the magnetic material 46 and the magnets 47 is furnished with a corrugated heat transfer plate 48 made of stainless steel, to define a secondary cooling system channel 49 for the ascending stream and a primary cooling system channel 50 for the descending stream. An annular current 51 in Fig. 9, which serves as the driving source of the primary cooling system channel, is generated coaxially with the annular space.

Also in the example of Figs. 7, 8 and 9 explained above, the intermediate heat exchanger 40 performs the heat exchange function and the pumping function of the primary cooling system, and hence, the pump of the primary cooling system can be omitted. As in the first embodiment, this brings forth the effects that the reliability of the system is remarkably enhanced and that both the functions can be gathered up with a good space factor.

As thus far described, according to each embodiment, a primary system pump within a tank reactor can be dispensed with, so that the factors of mechanical faults attributed to machine wear, vibrations, thermal deformation, etc. or electrical faults attributed to dielectric breakdown, etc. are all eliminated to markedly enhance the reliability of a system. In addition, an intermediate heat exchanger can be used for both a heat exchange function and a pumping function, which can contribute to the miniaturization of a main vessel and the simplification of a primary cooling system. Further, since the flow rate control of the primary cooling system can be performed by changing the flow rate of a secondary cooling system, the controllability of an FBR plant is enhanced advantageously.

As set forth above, the present invention achieves the effect that the space factor is improved because a heat exchange action and a non-mechanical pumping action are accomplished by an identical equipment and simultaneously the effect that a fast breeder reactor of high reliability is provided because a mechanical pump is dispensed with.

Although, in both the embodiments, a magnetic material is arranged on an inner side and a magnet is arranged outside the former, the present invention can be performed even when the magnet is arranged on the inner side and is encircled with the magnetic material contrariwise. In addition, the present invention can be performed even when the magnet is arranged on the inner side and is encircled with an outer magnet.

**Claims**

1. A fast breeder reactor comprising an intermediate heat exchanger (21, 40) with a two-system flow path consisting of a primary cooling system of the fast breeder reactor and a secondary cooling system using liquid metals, and a magnetic field generating means (23, 24, 46, 47) wherein said primary and secondary cooling system are oriented in a direction to intersect the magnetic flux generated by said magnetic field generating means (23, 24) and the flow of fluid in the primary system is induced by the forced flow of fluid in the secondary system, characterized in that the flow path of the coolant is formed by a tube-like annular space which is divided by an electrically conductive heat-conducting plate to constitute said primary flow path (31) and said secondary flow path (32) alternatingly in the annular direction, one member (24) that constitutes the magnetic field generating means is arranged on the inside of the annular space while the other member (23) that constitutes the magnetic field generating means is arranged on the outside thereof along said tube-like space and both of said members (23, 24) are composed of a magnet, or either one of said members is composed of a magnetic material (23) and the other one is composed of the magnet (24).

2. A fast breeder reactor according to claim 1, wherein the two members (23, 24) that constitute the magnetic field generating means are clad with a stainless steel plate (60, 61).

3. A fast breeder reactor according to claim 1, wherein the magnet (23, 24) is a permanent magnet or an electromagnet.

4. A fast breeder reactor according to claim 1, wherein one member and the other member constituting the magnetic field generating means (23, 24) are annularly arranged to surround a central region in the main vessel (4) of the fast breeder reactor.

5. A fast breeder reactor according to claim 1, wherein an inlet port (25) of the primary cooling system flow path (31) is opened in the liquid metal in the main vessel (4) of the fast breeder reactor while an outlet port (22) of the primary cooling system flow path (31) is connected to a high-pressure plenum chamber (19) of the fast breeder reactor, and a pump (6) on the outside of the main vessel (4) is connected to the second cooling system flow path (32).

6. A fast breeder reactor according to claim 1, wherein the heat-conducting plate (30) has a corrugated shape in cross section.

7. A fast breeder reactor according to claim 1, wherein a conduit (42) for flowing the secondary fluid is arranged on the inside of one member (46) that constitutes the magnetic field generating means arranged in the tube and a passage port (52) of said conduit (42) is provided at the lower part thereof, so that it communicates with said cooling flow path between the magnetic field generating means (46, 47) said flow path being provided with an outlet conduit (43).

## Patentansprüche

1. Schneller Brutreaktor, umfassend einen Zwischenwärmetauscher (21, 40) mit einem Zweisystem-Strömungsweg, bestehend aus einem Primärkühlsystem des schnellen Brutreaktors und einem Sekundärkühlsystem unter Anwendung von Flüssigmetallen, und einem Magnetfelderzeuger (23, 24, 46, 47), wobei das Primär- und das Sekundärkühlsystem in eine Richtung orientiert sind, in der sie den durch den Magnetfelderzeuger (23, 24) erzeugten Magnetfluß schneiden, und der Fluidstrom im Primärsystem durch den Zwangsumlauf des Fluids im Sekundärsystem induziert ist, dadurch gekennzeichnet, daß der Strömungsweg des Kühlmittels von einem rohrförmigen Ringraum gebildet ist, der durch eine elektrisch leitfähige Wärmeleitplatte unterteilt ist zur abwechselnd aufeinanderfolgenden Bildung des Primärströmungswegs (31) und des Sekundärströmungswegs (32) in Ringrichtung, daß ein den Magnetfelderzeuger bildendes Organ (24) an der Innenseite des Ringraums angeordnet ist, während das andere den Magnetfelderzeuger bildende Organ (23) an dessen Außenseite längs dem rohrförmigen Raum angeordnet ist, und beide Organe (23, 24) aus einem Magnet bestehen·oder das eine Organ aus einem Magnetwerkstoff (23) und das andere aus dem Magnet (24) besteht.

2. Schneller Brutreaktor nach Anspruch 1, wobei die beiden den Magnetfelderzeuger bildenden Organe (23, 24) mit rostfreiem Stahlblech (60, 61) ummantelt sind.

3. Schneller Brutreaktor nach Anspruch 1, wobei der Magnet (23, 24) ein Dauermagnet oder ein Elektromagnet ist.

4. Schneller Brutreaktor nach Anspruch 1, wobei das eine und das andere Organ, die den Magnetfelderzeuger (23, 24) bilden, ringförmig so angeordnet sind, daß sie einen zentralen Bereich im Hauptbehälter (4) des schnellen Brutreaktors umgeben.

5. Schneller Brutreaktor nach Anspruch 1, wobei eine Einlaßöffnung (25) des Primärkühlsystem-Strömungswegs (31) in das Flüssigmetall im Hauptbehälter (4) des schnellen Brutreaktors mündet, während eine Auslaßöffnung (22) des Primärkühlsystem-Strömungswegs (31) an eine Hochdruck-Sammelkammer (19) des schnellen Brutreaktors angeschlossen ist, und eine Pumpe (6) an der Außenseite des Hauptbehälters (4) an den Sekundärkühlsystem-Strömungsweg (32) angeschlossen ist.

6. Schneller Brutreaktor nach Anspruch 1, wobei das Wärmeleitblech (30) im Querschnitt gewellt ist.

7. Schneller Brutreaktor nach Anspruch 1, wobei eine Leitung (42) zum Durchfluß des Sekundärfluids an der Innenseite eines Organs (46), das den im Inneren des Rohrs angeordneten Magnetfelderzeuger bildet, angeordnet ist und eine Durchtrittsöffnung (52) der Leitung (42) an deren unterem Teil vorgesehen ist, so daß sie mit dem Kühlmittelströmungsweg zwischen dem Magnetfelderzeuger (46, 47) in Verbindung steht, wobei dieser Strömungsweg eine Auslaßleitung (43) aufweist.

## Revendications

1. Réacteur surrégénérateur rapide comprenant un échangeur de chaleur intermédiaire (21, 40) muni d'un trajet d'écoulement à deux systèmes consistant en un systéme de refroidissement primaire du réacteur surrégénérateur rapide et en un système de refroidissement secondaire pour l'utilisation de métaux liquides, et des moyens (23, 24, 46, 47) de production d'un champ magnétique, lesdits systèmes de refroidissement primaire et secondaire étant orientés dans une direction de manière à recouper le flux magnétique produit par lesdits moyens (23, 24) de production du champ magnétique, et l'écoulement du fluide dans le système primaire étant provoqué au moyen de l'écoulement forcé du fluide dans le système secondaire, caractérisé en ce que le trajet d'écoulement du réfrigérant est constitué par un espace annulaire en forme de tube qui est subdivisé par une plaque électriquement conductrice et thermoconductrice de manière à former ledit trajet d'écoulement primaire (31) et ledit trajet d'écoulement secondaire (32) alternativement dans la direction annulaire, un élément (24), qui constitue les moyens de production du champ magnétique, étant disposé sur le côté intérieur de l'espace annulaire, tandis que l'autre élément (23), qui constitue les moyens de production du champ magnétique, est disposé sur le côté extérieur dudit espace le-long dudit espace de forme tubulaire, et lesdits deux éléments (23, 24) sont constitués par un aimant ou bien l'un desdits éléments est constitué en un matériau magnétique (23) et l'autre est formé par l'aimant (24).

2. Réacteur surrégénérateur rapide selon la revendication 1, dans lequel les deux éléments (23, 24), qui constituent les moyens de production du champ magnétique, sont recouverts d'une plaque en acier inoxydable (60, 61).

3. Réacteur surrégénérateur rapide selon la revendication 1, dans lequel l'aimant (23, 24) est un aimant permanent ou un électroaimant.

4. Réacteur surrégénérateur rapide suivant la revendication 1, dans lequel un élément et l'autre élément constituant les moyens (23, 24) de production du champ magnétique sont disposés annulairement de manière à entourer une région centrale située dans le caisson principal (4) du réacteur surrégénérateur rapide.

5. Réacteur surrégénérateur rapide selon la revendication 1, dans lequel un orifice d'entrée (25) du trajet d'écoulement (31) du système de refroidissement primaire débouche dans le métal liquide situé dans le caisson principal (4) du réacteur surrégénérateur rapide, tandis qu'un orifice de sortie (22) du trajet d'écoulement (31) du système de refroidissement primaire est raccordé à une chambre de collecte à haute pression (19) du réacteur surrégénérateur rapide, et une pompe (6) située à l'extérieur du caisson principal (4) est raccordée au second trajet d'écoulement (32) du système de refroidissement.

6. Réacteur surrégénérateur rapide selon la revendication 1, dans lequel la plaque thermoconductrice (30) possède une forme ondulée en coupe transversale.

7. Réacteur surrégénérateur rapide selon la revendication 1, dans lequel un conduit (42) servant à véhiculer le fluide secondaire est disposé sur le côté intérieur d'un élément (46), qui constitue les moyens de production du champ magnétique disposés dans le tube, et un orifice de passage (52) dudit conduit (42) est prévu dans la partie inférieure de ce conduit de manière à communiquer avec ledit trajet d'écoulement de refroidissement entre les moyens (46, 47) de production du champ magnétique, ledit trajet d'écoulement étant pourvu d'un conduit de sortie (43).

# FIG. 1

## FIG. 2

FIG. 3

## FIG. 4

## FIG. 5

## FIG. 6

## FIG. 7

FIG. 8

FIG. 9

*FIG. 10*

## FIG. 11

44
49
42

## FIG. 12

44
49
45
50
42

## FIG. 13

44
49
50
52

## FIG. 14

44
49